# EUROPEAN PATENT APPLICATION

(11) **EP 1 681 862 A1**
(43) Date of publication of application: **19.07.2006**
(21) Application number: 05250160.8
(22) Date of filing: 14.01.2005
(51) Int. Cl.: H04N 5/74

(54) **Optic projecting method and structure of rear projection TV for dual projecting system**

(71) Applicant: Inshon Inc., Plano, TX 75023 (US)
(72) Inventor: Lin, Johnson Jang-Shen, Plano, TX 75023 (US); Lin, Tsen-Hwang, Dallas, TX 75252 (US)
(74) Representative: Doble, Richard George Vivian

(57) **Abstract**

The present invention concerns an optic projecting technique for a projecting system comprising a housing 10 and a projector unit 20, the projecting system comprises a housing 10 and a projector unit 20, wherein the housing 10 is provided with a display screen 11 and a plurality of optic elements 30 in the housing 10; the system is characterized in that: the projector unit 20 is placed on the back of the housing 10 in favor of detachment and displacement; when the projector unit 20 projects optic images into the housing 10, the images from the projector are reflected by the optic elements 30 and projected to the rear side of the display screen 11; when the projector unit 20 is placed outside of the housing 10, it directly projects the optic images to the display screen 11 at a suitable distance away, thus a dual projecting system for rear projection and front projection can be is formed.

## Description

The present invention relates to an optical projecting system and method, and especially to a dual mode projecting system in which a projector unit is able to be placed inside or outside a housing for rear projection or front projection.

Normally, front projection (FP) AV equipment has image signals input to a projector which converts the image signals into projected optical images which are displayed on a display screen a predetermined distance away. In this way, the images projected by the projector are magnified and displayed on a large screen.

In practical use of front projection (FP) AV equipment, the projector and the display screen must have any object that can impede image projecting therebetween removed, so that the images can be perfectly presented on the display screen. In practice this is a significant limitation.

Accordingly, rear projection (RP) TVs have been developed and incorporate a projector enclosed with a housing and have a display screen on the rear surface of which the optical images are projected from the projector. The resulting displayed images are larger sizes than those obtainable from a CRT, a liquid crystal display or a plasma TV.

By contrast with front projection (FP) AV equipment, a rear projection (RP) TV has all its electric circuits integrated in a housing. The projection path of the optical images is also limited to the inside of the housing, and thereby improves imaging. However, the display area of projected images is limited by the volume of the rear projection (RP) TV itself; that is, the larger the display area, the larger the required volume of the rear projection (RP) TV. As a result in the market place, rear projection (RP) TVs and front projection (FP) AV equipment have gradually formed distinct market segments. Families mostly select rear projection (RP) TVs in view of space constraints while people prefer to choose front projection (FP) AV equipment for environments such as offices, meeting rooms etc.

In fact, in both rear projection (RP) AV or TV equipment and front projection (FP) AV equipment, the key element which is the most expensive main part is the projector unit. In principle the projector unit could be provided in a housing with a fixed size for projecting images to project to the rear side of a display screen via reflection from optical elements, to form a rear projection (RP) TV; whereas if the projector unit directly projects optic images to a display screen located a suitable distance away, front projection (FP) AV equipment is formed.

Therefore, by making the projector unit in a rear projection (RP) TV or AV apparatus detachable, the projector unit can be used to project optical images directly onto a display screen located a suitable distance away, and the rear projection (RP) TV or AV equipment can be developed into a dual mode projecting system having both a rear projection (RP) TV and a front projection (FP) AV equipment capability.

The invention in its different aspects is defined in the independent claims.

In one embodiment, a dual projecting system comprises a housing and a projector unit, wherein the housing is provided at least with a display screen and a plurality of optic elements provided in the housing; characterized in that: the projector unit is placed on the back of the housing in favour of detachment and displacement, when the projector unit projects optic images into the housing, the images from the projector are reflected by the optic elements and projected to the rear side of the display screen; when the projector unit is placed outside of the housing, it directly projects the optic images to the display screen at a suitable distance away, thus the dual projecting system for rear projection and front projection can be formed.

In the above embodiment, the housing is integrally formed, or formed from a plurality of panels (plates). The latter housing preferably comprises: a first panel, two lateral plates respectively provided on the two lateral sides of the panel, a back plate located on the upper area of the back side of the housing and inclined downwards, a partition plate located on the lower area of the back plate and vertically extending downwards as well as a bottom plate provided on the bottom, characterized in that: the joints of these plates are connected and fixed by means of detachable engaging members, and can endure the housing with a fixed shape by engaging, and can allow these plates to be stacked one over another after detaching for storage.

Not only does the above dual projecting system have the advantages of a rear projection (RP) TV and front projection (FP) AV equipment, but also because the projector unit can be detached rather than fixed in a housing; the costs of production, assembly and maintenance can be reduced.

In addition to these advantages, by having a housing and a projector unit designed to be detachable and assemblable, manufacturers can focus their sales strategy on the "DIY" market (such as: that provided by IKEA company). This has several advantages, not only including lowering the costs of transportation and stocking, but also of following a different marketing path from that of the traditional household electrical appliances markets, thereby providing price competition for customers.

In use, when the projector unit is placed in the housing, to form a projection (RP) TV or AV apparatus, the projected light beams can cross during successive reflections without interference before being reflected onto the rear side of the display screen via optical elements. In a preferred embodiment, during the projection process in which optical images are projected to the rear side of the display screen, the optical images are reflected down from above or upwards from below, and then upper or lower corresponding optical elements reflect the optical images directly or indirectly to the rear side of the display screen.

Preferably the projector unit is provided on the back side of the housing, and the housing is provided on the upper area or the lower area of the display screen with an optical element to receive and reflect the optical images projected from the projector unit.

Preferably the projector unit is provided on the back side of the housing, and after the projector unit projects optical images to a fist optical element on the upper area or the lower area of the display screen, the first optical element reflects the optical images down from above or upwards from below to a second optical element on the upper area or the lower area of the display screen, and the second optical element reflects the optical images to a third optical element on the back side of the housing, whereby the optical images can thus be projected to the back side of the display screen provided on the housing.

The above construction can be applied to a rear projection (RP) TV, wherein the housing of the rear projection (RP) TV comprises:
a display screen provided on a front side of the housing;
a first optical element provided on an upper area or a lower area of the display screen in the housing;
a second optical element provided in opposition to the first optical element in the housing on the upper area of the lower area of the display screen; and
a third optical element provided on the back side of the housing.

The optical images projected by the projector unit in the above embodiment are reflected sequentially by the first, the second and the third optical elements in the housing, and are then projected to the rear side of the display screen.

In the method and structure as stated above, the housing is preferably further provided on an upper area or a lower area of the back side thereof with a receiving cartridge for receiving the projector unit in order to facilitate detaching and assembling of the projector unit.

Preferred embodiments are described below by way of example only with reference to Figures 1 to 3 of the accompanying drawings, wherein:
Fig. 1 is a perspective view of one embodiment;
Fig. 2 is an exploded perspective view of another embodiment, a rear projection (RP) TV, and
Fig. 3 is a sectional schematic view showing the optical path defined by the optical elements in the above embodiments.

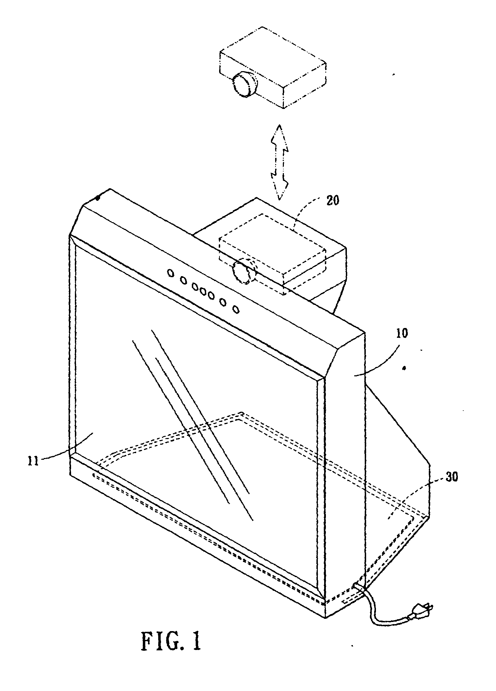

Referring to the embodiment of Fig. 1, the dual projecting system comprises a housing 10 and a projector unit 20, wherein the housing 10 is provided at least with a display screen 11 and a plurality of optic elements 30 provided in the housing 10. The projector unit 20 is placed on the back of the housing 10 to facilitate detachment and displacement. When the projector unit 20 projects optic images into the housing 10, the images are projected to the rear side of the display screen 11 by reflection of the optic elements 30; thus a rear projection (RP) TV is formed. When the projector unit 20 is placed outside of the housing 10, it directly projects the optic images to the display screen 11 at a suitable distance away (not shown), thereby a set of front projection (FP) AV equipment is formed.

The appearance of the housing 10 is similar to a normal rear projection (RP) TV; when the projector unit 20 is removed from the housing 10 and is moved to become the front projection (FP) AV equipment, another display screen is allocated for it, and even an indoor or outdoor wall of plain color (preferably of white color) can be used as a display screen; this is the mode of application of a set of normal front projection (FP) AV equipment, and no further narration is required here.

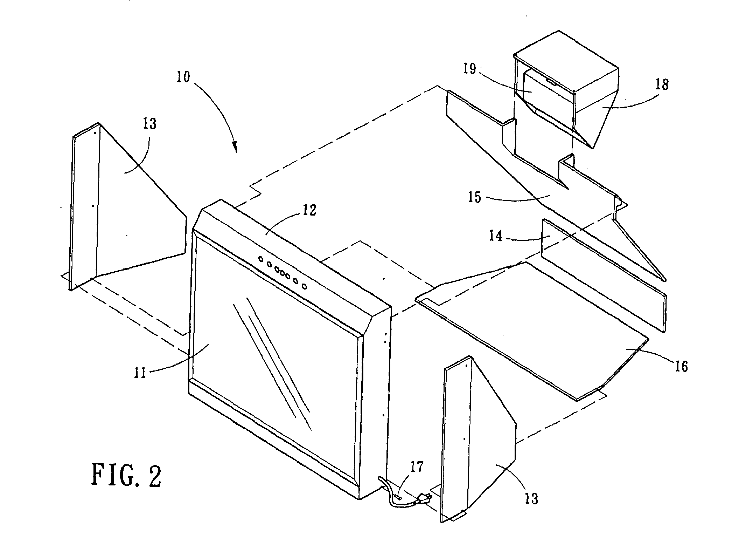

As shown in Fig. 2, the housing 10 is optionally formed from a plurality of panels (plates) comprising: a first panel 12, two lateral plates 13 respectively provided on the two lateral sides of the panel 12, a back plate 14 located on the upper area of the back side of the housing 10 and indined downwards, a partition plate 15 located on the lower area of the back plate 14 and vertically extending downwards as well as a bottom plate 16 provided on the bottom. The joints of these plates are connected and fixed by means of detachable engaging members 17, which by engaging the housing 10 define a fixed shape. These plates can be detached and stacked one over another to facilitate storage.

The engaging members 17 depicted in the drawing are screws, capable of easily effecting detachment and engagement of the plates. In practice, other engaging members or other connecting members needing no tool can also be used, alternatively, tenons and mortises can be directly provided on the plates; even the plates can be provided with pivotal connecting members such as hinges etc. to facilitate detaching and assembling of the housing 10.

The housing 10 need not be formed from a plurality of panels (plates); an example is that, after the housing 10 is integrally formed in a die, it can be mounted with a projector unit and a plurality of optic elements.

Additionally, in an embodiment of the dual projecting system, the housing 10 is further provided on an upper area or a lower area of the back side thereof with a receiving cartridge 18 for receiving the projector unit in order to facilitate detaching and assembling of the projector unit 20. In practice, the receiving cartridge 18 can optionally be provided with an opening for the convenience of taking the projector unit 20 out of the receiving cartridge 18; alternatively, the receiving cartridge 18 can be provided with an engaging structure separable from the housing 10, whereby if it is desired to separate or fix the projector unit 20 from/to the housing 10, it is necessary only to detach or mount (fix) the receiving cartridge 18 from/to the housing 10, so that the projector unit 20 can be simultaneously detached and assembled.

In addition to this, the receiving cartridge 18 can optionally be provided with insertion slots and a board interconnect mechanism 19 for signal connecting. These can be connected with the projector unit 20, and when the projector unit 20 is inserted into the receiving cartridge 18, they can fix its position and form signal connections. This is of benefit in fixing the angle of optical projection.

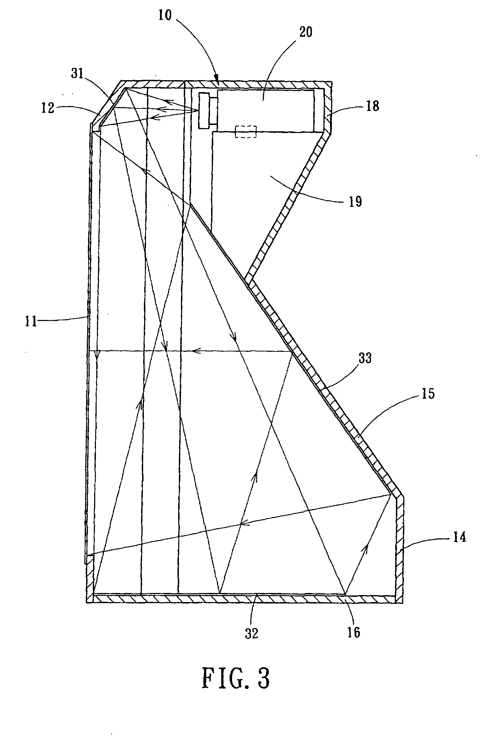

As shown in Fig. 3, the projector unit 20 is mounted on the housing 10, to form a rear projection (RP) TV. The projected light beams will not mutually interfere when they are crossed with one another whether in a singly or multiply folded light path, before being reflected to the rear side of the display screen via the optical elements.

The housing 10 has in the front of it a display screen 11, and has therein a plurality of optic elements 30 (including the optic elements 31, 32 and 33) to reflect the images. The projector unit 20 is provided on the back side of the housing 10, and after the projector unit 20 projects optical images to a first optic element 31 on the upper area or the lower area of the display screen 11, the first optical element 31 reflects the optical images down from above (as shown) or alternatively upwards from below to a second optical element 32 on the lower area (alternatively the upper area) of the display screen 11, and the second optical element 32 reflects the optic images to a third optical element 33 on the back side of the housing 10. The optical images can thus be projected to the back side of the display screen 11 by reflection from the third optical element 33.

The above optical elements 31, 32 and 33 are mirrors in this embodiment.

The optical images projected by the projector unit 20 are thus reflected sequentially by the first, the second and the third optical elements (mirrors) 31, 32 and 33 in the housing 10, and are then projected to the rear side of the display screen 11.

More generally, as shown in Fig. 3 during the process of projecting images to the rear side of the display screen 11 of the housing 10, the images are reflected down from above or upwards from below, and the optical elements (e.g. mirrors 31, 32 and 33) reflect the images directly or indirectly to the rear side of the display screen 11.

In the above-described rear projection (RP) TV, the projector unit 20 is provided on the back side of the housing 10, the housing 10 is provided with the first optical element 31 on an upper area of the display screen 11 to receive and reflect the optic images projected from the projector unit 20.

The above description and drawings are given only for illustrating preferred embodiments of the present invention, and not for limiting its scope. It will be apparent to those skilled in this art that various modifications or changes also fall within the scope of the appended claims.

## Claims

1. A rear projection system comprising a housing (10) and a projector unit (20), wherein said housing is provided at least with a display screen (11) and a plurality of internal optical elements (31, 32, 33) wherein said projection system has a rear projection mode in which said projector unit (20) is arranged to project optical images within said housing (10), said images being reflected by said optical elements (31, 32, 33) onto a rear side of said display screen (11), **characterized in that** said projector unit is removably mounted on said housing to enable a front projection mode in which said projector unit is placed outside of said housing and directly projects optical images onto a front side of said display screen or an external display surface.

2. A dual projecting system as claimed in claim 1, wherein: an upper or lower rear region of said housing (10) is provided with a receiving cartridge (18) for receiving said projector unit (20).

3. A rear projection system comprising a housing (10) having a front display screen (11) and a plurality of internal optical elements (31, 32, 33) arranged to reflect optical images onto a rear side of said display screen, **characterized by** a cartridge (18) mountable on said housing (10) and arranged to receive a projector unit (20) for generating said optical images.

4. A rear projection system according to claim 2 or claim 3 wherein said cartridge (18) is provided with locating means for locating such a projector unit (20) therein and/or signal connection means for electrical connection to such a projector unit.

5. A rear projection system according to claim 3 or claim 4 wherein said cartridge (18) is provided on an upper or lower region of said housing.

6. A rear projection system as claimed in any of claims 2 to 5 wherein: said receiving cartridge (18) is provided with an opening for insertion and removal of said projector unit (20) in said receiving cartridge.

7. A rear projection system as claimed in any of claims 2 to 6, wherein: said receiving cartridge (18) is provided with an engaging structure for removably engaging with said housing.

8. A rear projection system claimed in any preceding claim wherein: said housing (10) is formed from a plurality of panels (12-16).

9. A rear projection system as claimed in claim 8, wherein: in an assembled configuration said panels (12-16) are mutually connected and fixed by means of engaging members (17) which are detachable to enable disassembly and storage.

10. A rear projection system as claimed in claim 8, wherein: said panels are connected with hinges and can be folded into a collapsed configuration for storage.

11. A rear projection system as claimed in any of clams 1 to 7, wherein: said housing is integrally formed.

12. A rear projection system as claimed in any preceding claim, wherein: said optical elements (31-33) are mirrors.

13. A rear projection system comprising a housing (10) and a projector unit (20), wherein said housing is provided on the front thereof at least with a display screen (11) and a plurality of optical elements (31-33) in said housing for reflecting optical images; **characterized in that**:
said projector unit (20) is provided on a back side of said housing (10), said housing being provided with a first optical element (31) located above or below said display screen to receive and reflect optic images projected from said projector unit.

14. A rear projection system according to claim 13, further comprising a second optical element (32) provided in the optical path of said first optical element (31) in said housing (10); and
a third optical element (33) provided on a back side of said housing, wherein optical images projected by said projector unit (20) are reflected sequentially by said first, second and third optical elements in said housing, and then are projected onto said rear side of said display screen (11).

15. A rear projection system according to any preceding claim, which comprises TV or AV circuitry for outputting image signals to the projector unit (20).

16. A method according to claim 15, wherein: said projector unit (20) projects optical images to said first optical element (31) disposed above said display screen, said first optical element (31) reflects said optical images downwardly from above to a second optical element (32) below said display screen (11), said second optical element reflects said optical images to a third optical element (33) on said back side of said housing, and said optical images are reflected by said third optical element and projected onto a back side of said display screen.

17. A method according to claim 15, wherein: said projector unit projects optical images to said first optical element (31) disposed below said display screen, said first optical element reflects said optical images upwardly from below to a second optical element (32) below said display screen, said second optical element reflects said optical images to a third optical element on said back side of said housing (10) and said optical images are reflected by said third optical element and projected onto a back side of said display screen (11).

18. A method of forming images in a rear projection (RP) TV or AV display wherein a projector unit (20) projects optical images forwardly to a rear side of a display screen (11) in a housing (10), and said optical images are reflected downwardly from above or upwardly from below further optical elements which reflect said optical images directly or indirectly to a rear side of said display screen (11).

## Amended claims

### Amended claims in accordance with Rule 86(2) EPC.

**1.** A rear projection system comprising a housing (10) and a projector unit (20), wherein said housing is provided on the front thereof at least with a display screen (11) and a plurality of optical elements (31- 33) in said housing for reflecting optical images, said optical elements including:
a first optical element (31) arranged to reflect optical images projected from said projector unit;
a second optical element (32) provided in the optical path of said first optical element (31) in said housing (10); and
a third optical element (33) provided on the back side of said housing, wherein optical images projected by said projector unit (20) are reflected sequentially by said first, second and third optical elements in said housing, and then are projected onto the rear side of said display screen, **characterized in that** said first and second optical elements (31,32) are located above and below said display screen (11) respectively, or vice versa.

**2.** A rear projection system as claimed in claim 1, wherein: an upper or lower rear region of said housing (10) is provided with a receiving cartridge (18) for receiving said projector unit (20).

**3.** A rear projection system as claimed in claim 2 wherein: said receiving cartridge (18) is provided with an opening for insertion and removal of said projector unit (20) in said receiving cartridge.

**4.** A rear projection system according to claim 2 or claim 3 wherein said cartridge (18) is provided with locating means for locating said projector unit (20) therein and/or signal connection means for electrical connection to said projector unit.

**5.** A rear projection system as claimed in any of claims 2 to 4, wherein: said receiving cartridge (18) is provided with an engaging structure for removably engaging with said housing.

**6.** A rear projection system claimed in any preceding claim wherein: said housing (10) is formed from a plurality of panels (12-16).

**7.** A rear projection system as claimed in claim 6, wherein: in an assembled configuration said panels,(12-16) are mutually connected and fixed by means of engaging members (17) which are detachable to enable disassembly and storage.

**8.** A rear projection system as claimed in claim 8, wherein: said panels are connected with hinges and can be folded into a collapsed configuration for storage.

**9.** A rear projection system as claimed in any of claims 1 to 8, wherein: said housing is integrally formed.

**10.** A rear projection system as claimed in any preceding claim, wherein: said optical elements (31-33) are mirrors.

**11.** A rear projection system according to claim 10 wherein said first, second and third optical elements (31-33) are all plane mirrors.

**12.** A rear projection system according to any preceding claim, which comprises TV or AV circuitry for outputting image signals to the projector unit (20).

**13.** A method of forming images in a rear projection (RP) TV or AV display wherein:
a projector unit (20) projects optical images to a first optical element (31);
said first optical element reflects said optical images to a second optical element (32);
said second optical element reflects said optical images to a third optical element (33) on a back side of a housing (10) of the display; and
said third optical element reflects said optical images to a rear side of a display screen (11) in said housing, **characterized in that** said first and second optical elements (31,32) are located above and below said display screen (11) respectively or vice versa whereby the optical images are reflected downwardly or upwardly behind the display screen from the first to the second optical element.

**14.** A method according to claim 15 wherein said projector unit (20) is located on the back side of said housing (10).
